Europäisches Patentamt

**European Patent Office**

**Office européen des brevets**

(11) Publication number: **0 075 514**
**A1**

(12) # EUROPEAN PATENT APPLICATION

(21) Application number: **82401677.8**

(22) Date of filing: **15.09.82**

(51) Int. Cl.³: **C 02 F 5/10,** C 02 F 5/12,
C 09 K 15/04

(30) Priority: 17.09.81 US 303238
17.09.81 US 303231
08.03.82 US 356059

(43) Date of publication of application: **30.03.83**
**Bulletin 83/13**

(84) Designated Contracting States: **AT BE CH DE FR GB IT
LI LU NL SE**

(71) Applicant: **CALGON CORPORATION,
Route 60-Campbell's Run Road, Robinson Township
Pennsylvania 15205 (US)**

(72) Inventor: **Yorke, Monica A., 1408 State Avenue,
Coraopolis Pennsylvania 15108 (US)**
Inventor: **Amjad, Zahid, 701-6 College Park Drive,
Coraopolis Pennsylvania 15108 (US)**

(74) Representative: **Martin, Jean-Jacques et al, Cabinet
REGIMBEAU 26, Avenue Kléber, F-75116 Paris (FR)**

(54) Cationic polymers and surfactants as silica polymerization retardants and dispersants.

(57) The instant invention is directed to a method of retarding the polymerization and formation of silica deposits in cooling water applications comprising adding to the cooling water a polymerization inhibiting concentration of a mixture of an inhibitor selected from the group consisting of cationic polymer, cationic surfactant, or mixtures thereof. The instant invention is also directed to a method of retarding the polymerization and formation of silica deposits in an aqueous system comprising adding to the water a polymerization inhibiting concentration of a mixture of (a) at least one branched cationic polymer and (6) at least one cationic surfactant or linear cationic polymer. The instant invention is also directed to a mixture of (a) at least one branched cationic polymer and (b) at least one cationic surfactant or linear cationic polymer.

C-1294Y

"CATIONIC POLYMERS AND SURFACTANTS AS
SILICA POLYMERIZATION RETARDANTS
AND DISPERSANTS"

Background of the Invention

Silica deposition in aqueous systems, for example cooling towers and hypersaline geothermal brines, has been a continual problem. They have, historically, been cleaned by blow-down. If deposition occurs, mechanical removal has been the method used. Obviously, this causes loss of time and increased energy and labor costs.

pH affects the ionization of silanol groups and, therefore, affects the polymerization rate. Silica first forms, then three dimensional networks and, eventually, colloidal particles grow through condensation. At pH 7, nuclei formation and particle growth is very rapid. The pH of cooling water is generally 6.0 to 8.5 and the water temperature is generally about 30 to 70$^{o}$C. The pH of geothermal brines is generally 4.0 to 6.0 and the brine temperature is generally about 100 to 210$^{o}$C.

It is known to use cationic polymers or cationic surfactants as silica scale inhibitors in hypersaline geothermal brines (Harrar, J.E. et al, "Final Report on Tests of Proprietary Chemical Additives as Anti-scalants for Hypersaline Geothermal Brine", January 1980, Lawrence Livermore Laboratory; Harrar, J.E. et al, "On-Line Tests of Organic Additives for the Inhibition of the Precipitation of Silica from Hypersaline Geothermal Brine IV. Final tests of Candidate Additives", February 1980, Lawrence Livermore Laboratories; and Harrar, J.E. et al, "Studies of Scale Formation and Scale Inhibitors at the Salton Sea Geothermal Field", Corrosion/80, Paper No. 225, International Corrosion Forum Devoted Exclusively to the Protection and Performance of Materials, March 3-7, 1980, Chicago, Illinois).

## Description of the Invention

The instant invention is directed to a method of retarding the polymerization and formation of silica deposits in cooling water applications comprising adding to the cooling water a polymerization inhibiting concentration of a mixture of an inhibitor selected from the group consisting of cationic polymer, cationic surfactant, or mixtures thereof.

The instant invention is also directed to a method of retarding the polymerization and formation of silica deposits in an aqueous system comprising adding to the water a polymerization inhibiting concentration of a mixture of (a) at least one branched cationic polymer and (b) at least one cationic surfactant or linear cationic polymer.

The instant invention is also directed to a mixture of (a) at least one branched cationic polymer and (b) and at least one cationic surfactant or linear cationic polymer.

The use of cationic polymers and/or cationic surfactants is, thus, proposed for retarding silica polymerization and preventing silica deposition in cooling water applications. Synergism was found in the use of a mixture of branched cationic polymer and cationic surfactant and/or linear cationic polymer in retarding silica polymerization and preventing silica deposition in both cooling water and geothermal brines applications. The inhibitor is added in a concentration of, preferably, 1.5 to 100 ppm active; most preferably 2 to 50 ppm. The inhibitor retards polymerization of the silica and thus, retards its precipitation and subsequent deposition.

Any cationic polymer may be used in cooling water applications. Examples include homopolymers of the following: dimethyldiallyl ammonium chloride, ethyleneimine, methacrylamido propyl trimethyl ammonium chloride, 2-methacryloyloxyethyl trimethyl ammonium methosulfate and diquaternary ionene. The preferred polymers are homopolymers of dimethyldiallyl ammonium chloride, 2-methacryloyloxyethyl trimethyl ammonium methosulfate, methacrylamido propyl trimethyl ammonium chloride and ethyleneimine.

Copolymers of the above homopolymers with any of the following: acrylamide, ethylene oxide, vinyl alcohol, vinyl pyrollidone and the like, may also be used. The preferred copolymers are copolymers of acrylamide and dimethyldiallylammonium chloride;

acrylamide and methacrylamido propyl trimethyl ammonium chloride; and acrylamide and 2-methacryloyloxyethyl trimethyl ammonium methosulfate.

Any cationic surfactant may be used in cooling water applications. Examples include: dimethyl dialkyl ($C_{12}$-$C_{16}$) quaternary ammonium chloride; dimethyl dicetyl quaternary ammonium chloride; trimethyl cetyl quaternary ammonium chloride; trimethyl coco quaternary ammonium chloride; dimethyl dicoco ammonium chloride; trimethyl $C_8$,$C_{10}$ quaternary ammonium chloride; dioctyl dimethyl ammonium chloride; didecyl dimethyl ammonium chloride; alkyl dimethyl benzyl ammonium chloride; methyl polyoxyethylene alkyl ammonium chloride; methyl bis hydroxyethyl coco ammonium chloride; methyl bis hydroxyethyl oleyl ammonium chloride; $C_{18}$ trimethyl ammonium chloride; and $C_{18}$(polyoxyethylene) methyl ammonium chloride. The preferred surfactants are $C_{18}$ trimethyl ammonium chloride and $C_{18}$(polyoxyethylene) methyl ammonium chloride.

By "branched cationic polymer" is meant a cationic polymer containing side chains or cross-linking. Branched cationic polymers may be prepared, for example, by polymerizing ethyleneimine by itself; or by polymerizing ethylenically unsaturated monomers such as diallyldimethyl ammonium chloride, 3-acrylamidomethylbutyltrimethyl ammonium chloride, methacryloamido propyl trimethyl ammonium chloride, 2-methacryloyloxyethyl trimethyl ammonium chloride, 2-methacryloyloxyethyl trimethyl ammonium methosulfate or diquaternary ionene, in the presence of a branching or cross-linking agent such as methylenebisacrylamide or triallylmethyl ammonium chloride. Copolymers prepared in the presence of branching or cross-linking agents may also be used.

Mixtures of the above cationic polymers and surfactants may also be used.

Examples of "linear cationic polymers" include homopolymers of the following: dimethyldiallyl ammonium chloride, methacrylamido propyl trimethyl ammonium chloride, 2-methacryloyloxyethyl trimethyl ammonium chloride, 2-methacryloyloxyethyl trimethyl ammonium methosulfate and diquaternary ionene. The preferred linear polymers are homopolymers of dimethyl diallyl ammonium chloride. Copolymers of the above homopolymers with any of the following: acrylamide, ethylene oxide, vinyl alcohol, vinyl pyrrolidone and the like, are also "linear cationic polymers".

Mixtures of cationic surfactant and linear cationic polymer may be used in combination with the branched cationic polymer.

The ratio of branched cationic polymer to cationic surfactant and linear cationic polymer is not critical. It is preferred to use a ratio of 4:1 to 1:4.

The molecular weight of the polymers is not critical; however, it is preferred that the molecular weight of the polymers, including both the branched and linear polymers, be less than 150,000, as determined by light scattering methods.

0075514

The inhibitor may be added as solid or liquid. It is preferred to add it in solution, 1 gram active ingredient/liter of water.

Other dispersants may also be added, such as organophosphonates, polyphosphates, organic anionic polymers, polyacrylates, polymaleic anhydrides, and the like.

### Examples

### Examples 1 through 9

5.0 mls of 1.0 M sodium chloride, 8.9 mls of 0.1 M sodium silicate solution, inhibitor, if any, and sufficient water to bring the volume to 100 mls, were mixed together. The temperature of the mixture was held at about 40°C. throughout the experiment and the pH was adjusted to 7.0 by the addition of hydrochloric acid. The silica monomer concentration was determined after 5.0 minutes by the molybdate method [Alexander, G.B., J. American Chemical Society 75, 5055 (1953)] and at subsequent time intervals. The data was analyzed by use of a second order kinetics plot and the polymerization rate was determined. Table I records the effects of inhibitor dosage on the silica polymerization process.

### Examples 10 through 13

20.0 mils of 1.0 M sodium chloride, 8 mls of 0.1 M sodium silicate solution, a predetermined amount of inhibitor, if any, were mixed and diluted with distilled water to give 100 mls final volume. The temperature of the mixture was held at about 40°C. throughout the experiment and the pH was adjusted to 8.0 by the addition of hydrochloric acid. The silica monomer concentration was determined after 5.0 minutes by the molybdate method and at subsequent time intervals. The data was analyzed by use of a second order kinetic plot and the polymerization rate was determined. Table I records the effects of inhibitor dosage on the silica polymerization process.

## Examples 14 through 18

A known volume of $Na_2SiO_3$ solution was mixed with the appropriate volumes of 1.0 $\underline{M}$ NaCl and 1 g/l of the inhibitor indicated in Table I. Deionized water was added to bring the volume to 100 ml. The pH was adjusted as indicated in Table I by the addition of 1.0 $\underline{M}$ HCl. The temperature was held at about 40°C. The polymerization rate was determined by taking aliquots periodically and analyzing them by the molybdate method.

TABLE I

| Example | Inhibitor | Silica Polymerization Rate ($M^{-1}$ min.$^{-1}$) at Dose | | | | | | |
|---------|-----------|-------|-------|--------|--------|--------|--------|---------|
| | | 0 ppm | 5 ppm | 10 ppm | 20 ppm | 30 ppm | 50 ppm | 100 ppm |
| 1 | Polydimethyldiallyl ammonium chloride ; $v=25.0$ | --- | 0.3 | --- | 0.54 | --- | 1.35 | --- |
| 2 | Copolyacrylamide/dimethyldiallyl ammonium chloride ; $v=19.0$ | --- | 0.26 | --- | 0.50 | --- | 1.27 | --- |
| 3 | Copolyacrylamide/dimethyldiallyl ammonium chloride ;$v=9800$ | --- | 0.26 | --- | 0.41 | --- | 1.07 | --- |
| 4 | Poly 2-methacyloyloxyethyl trimethyl ammonium methosulfate; $v=6.1$ | --- | 0.41 | --- | 0.51 | --- | 1.25 | --- |
| 5 | Polymethacrylamido propyl trimethyl ammonium chloride ; $v = 5.6$ | --- | 0.64 | --- | 0.19 | --- | 0.80 | --- |
| 6 | Copolyacrylamide/methacrylamido propyl trimethyl ammonium chloride ;$v=7.0$ | --- | 0.34 | --- | 0.20 | --- | 0.85 | --- |
| 7 | Copolyacrylamide/methacrylamido propyl trimethyl ammonium chloride ;$v=30.3$ | --- | 0.60 | --- | 0.28 | --- | 0.93 | --- |
| 8 | Copolyacrylamide/methacrylamido propyl trimethyl ammonium chloride;$v=55.8$ | --- | 0.40 | --- | 0.17 | --- | 1.00 | --- |

0075514

C-1294 Y

| | | | | | | | |
|---|---|---|---|---|---|---|---|
| 9 | Polyethyleneimine ; v=2.0 | --- | 0.21 | --- | 0.30 | --- | 0.67 | --- |
| 10 | $C_8,C_{10}$ trymethyl ammonium chloride | ---- | --- | 5.5 | 4.8 | 4.0 | 1.75 | 0.5 |
| 11 | Didecyldimethyl ammonium chloride | --- | --- | 6.3 | --- | 1.5 | 0.25 | --- |
| 12 | $C_{18}$ (polyethyleneoxide) methyl ammonium chloride | --- | --- | 5.35 | 1.6 | 0.6 | 0.6 | --- |
| 13 | $C_{18}$ trimethyl ammonium chloride | --- | --- | 4.75 | --- | 0.25 | 0.35 | --- |
| 14 | 1:1 polydimethyldially ammonium chloride/$C_{18}$ (polyethylene oxide) methylammonium chloride | 7.0 | --- | 2.35 | 0.35 | --- | --- | --- |
| 15 | 1:1 polydimethyldiallyl ammonium chloride/$C_{18}$ trimethyl ammonium chloride | 7.0 | --- | 2.5 | 0.4 | --- | --- | --- |
| 16 | 1:1 polyethyleneimine/ $C_{18}$ (polyethylene oxyde) methylammonnium chloride | 7.0 | 1.9 | 0.7 | 0.3 | --- | --- | --- |
| 17 | 1:1 polyethyleneimine/ $C_{18}$ trimethyl ammonium chloride | 7.0 | 2.25 | 0.3 | --- | --- | --- | --- |
| 18 | 1:1 polyethyleneimine/ polydimethyldiallyl ammonium chloride | 7.0 | 2.1 | 0.4 | --- | --- | --- | --- |

$1_v$ = Brookfield viscosity (cps) 10% in 1.0 $\underline{M}$ Nacl.

0075514

0075514
C-1294Y

WHAT IS CLAIMED IS:

1. A method of retarding the polymerization and formation of silica deposits in cooling water applications comprising adding to the cooling water a polymerization inhibiting concentration of a mixture of an inhibitor selected from the group consisting of cationic polymer, cationic surfactant, or mixtures thereof.

2. The method of Claim 1, wherein said inhibitor is added to the water at 1.5 to 100 ppm.

3. The method of Claim 2, wherein said inhibitor is added at 2 to 50 ppm concentration.

4. The method of Claim 1, wherein said cationic surfactant is selected from the group consisting of $C_{18}$ trimethyl ammonium chloride and $C_{18}$(polyoxy-ethylene) methyl ammonium chloride.

5. The method of Claim 1, wherein said cationic polymer is selected from the group consisting of homopolymer of dimethyldiallyl ammonium chloride, 2-methacryloyloxyethyl trimethyl ammonium methosulfate, methacrylamido propyl trimethyl ammonium chloride and ethyleneimine.

6. The method of Claim 1, wherein said cationic polymer is selected from the group consisting of copolymers of acrylamide and dimethyldiallyl ammonium chloride, methacrylamido propyl trimethyl ammonium chloride or 2-methacryloyloxyethyl trimethyl ammonium methosulfate.

7. The method of Claim 1, wherein other dispersants are also added.

8. A method of retarding the polymerization and formation of silica deposits in an aqueous system comprising adding to the water a polymerization inhibiting concentration of a mixture of (a) at least one branched cationic polymer and (b) at least one cationic surfactant or linear cationic polymer.

9. The mixture of Claim 8, wherein said branched cationic polymer is polyethyleneimine and said linear cationic polymer is polydimethyldiallyl ammonium chloride.

10. The mixture of Claim 8, wherein said branched cationic polymer is polyethyleneimine and said cationic surfactant is selected from the group consisting of $C_{18}$ trimethyl ammonium chloride and $C_{18}$ (polyoxyethylene) methyl ammonium chloride.

11. A mixture of (a) at least one branched cationic polymer and (b) at least one cationic surfactant or linear cationic polymer.

## EUROPEAN SEARCH REPORT

| | DOCUMENTS CONSIDERED TO BE RELEVANT | | EP 82401677.8 |
|---|---|---|---|

| Category | Citation of document with indication, where appropriate, of relevant passages | Relevant to claim | CLASSIFICATION OF THE APPLICATION (Int. Cl. 3) |
|---|---|---|---|
| A | US - A - 3 832 302 (LANSFORD)<br>* Abstract; column 3, line 20 - column 4, line 54; column 7, lines 16-28 * | 1-4 | C 02 F 5/10<br>C 02 F 5/12<br>C 09 K 15/04 |
| A | US - A - 4 205 143 (GOODMAN)<br>* Abstract; column 3, line 50 - column 4, line 4 * | 1,5,6 | |
| A | US - A - 3 578 589 (CHIH MING HWA)<br>* Abstract * | 1-3 | |

TECHNICAL FIELDS
SEARCHED (Int. Cl. 3)

C 02 F

C 09 K

C 08 F 20/00

D 21 H

C 08 L 33/00

The present search report has been drawn up for all claims

| Place of search | Date of completion of the search | Examiner |
|---|---|---|
| VIENNA | 10-11-1982 | WILFLINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document